# EUROPEAN PATENT APPLICATION

(11) **EP 2 769 626 A1**
(43) Date of publication of application: **27.08.2014**
(21) Application number: 13000927.7
(22) Date of filing: 25.02.2013
(51) Int. Cl.: A23G 4/10, A23L 1/308

(54) **Chewing gum composition**

(71) Applicant: Cargill, Incorporated, Wayzata, MN 55391 (US)
(72) Inventor: The designation of the inventor has not yet been filed
(74) Representative: Elseviers, Myriam

(57) **Abstract**

The present invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener. It also discloses a chewing gum composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100. It further comprises a carbohydrate based polyol, and/or non-caloric high intensity sweetener. The present invention further relates to the use of the chewing gum composition for release of fiber during consumption of said chewing gum composition.

## Description

### Field of the Invention

The present invention relates to chewing gum composition containing arabinoxylan-oligosaccharides and optionally xylo-oligosaccharides as fiber material.

### Background of the Invention

An increasing preoccupation of consumers with nutrition and with the potential beneficial effects of foods is nowadays observed and this also has an impact on the perception of confectionery products.

Chewing gum in particular is perceived by consumers as a confectionery product providing some beneficial effects, such as mouth hygiene, teeth protection and the like. Chewing gum is a widely consumed type of confectionery product, also consumed by consumers who do not usually consume other kinds of confectionery.

However, there is still a further need of providing additional beneficial effects to chewing gum compositions. The current invention provides such a an improved chewing gum composition.

### Summary of the Invention

The current invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100 , a carbohydrate based polyol, and/or non-caloric high-intensity sweetener.

The current invention relates to a chewing gum composition comprising the composition of the present invention and a gum base.

The current invention relates to a coated product comprising a core and a hard coating surrounding the core wherein the core is the chewing gum composition of the current invention.

The current invention further relates to the use of the chewing gum composition of the current invention for release of fiber during the consumption of said chewing gum composition.

### Detailed Description

The present invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener.

Further the invention relates to an edible composition comprising a fiber containing material wherein the fiber containing material is arabinoxylan-oligosaccharides and optionally xylo-oligosaccharides having an average degree of polymerisation of at least 2 to 50, a carbohydrate based polyol, and/or non-caloric high-intensity sweetener and a polydextrose.

### Dietary fiber

Dietary fiber (fiber in the current invention) refers to indigestible carbohydrate based material. It encompasses carbohydrate polymers which are not hydrolyzed by the endogenous enzymes in the human small intestine. It may encompass two types of fibers. Either the fiber is soluble in water or it refers to a fiber which is not soluble in water. Soluble fibers in the sense of the current invention are understood those, which form a homogeneous solution in water, in a concentration of at least 1 g/L at room temperature.

Many of the physiological effects associated with dietary fiber consumption, including effects on stool parameters, colonic health, mineral absorption in the colon, vitamin synthesis in the colon, the metabolic syndrome and immune system, are believed to promote health and wellbeing of the consumer. Dietary fibers have a strong impact on the colonic ecosystem and serve as primary substrates for intestinal microbiota metabolism.

### AXOS

Preparations consisting predominantly of arabinoxylan-oligosaccharides and minor amounts of xylo-oligosaccharides (hereinafter abbreviated as AXOS), in the context of the present invention, refer to poly- or oligosaccharides comprising a backbone of beta-(1-4)-linked D-xylopyranosyl residues (xylose) with a degree of polymerisation of the backbone from 2 and 100, preferably from 2 to 50, 3 to 30, 3 to 20, 5 to 10, with no (in the case of xylo-oligosaccharides) or at least one alpha-L-arabinofuranosyl (arabinose) residue linked to one of the xylose residues of the backbone per molecule. Other substituents such as acetyl, alfa-glucuronyl, alfa-4-O-methylglucuronyl, galacturonyl, xylosyl, rhamnosyl, galactosyl, or glucosyl side chains, or short oligosaccharide side chains, can be attached to one or more of the xylose residues and hydroxycinnamic acids, such as ferulic acid, dehydrodiferulic acid, p-coumaric acid, caffeic acid or sinapic acid, can be linked to one or more of the arabinose units. AXOS can be derived from arabinoxylans by partial hydrolysis, e.g. using acids or arabinoxylan degrading enzymes and/or physical treatment. Without being limited, a suitable preparation of AXOS is for example provided in EP 1 418 819 or EP 1 758 470.

It is further to be noted that AXOS in the present invention also covers the preparations that are not 100% pure and are further containing ashes, proteins and other carbohydrates. It goes without saying that the current invention also covers the AXOS enriched preparations whereby AXOS can be added in liquid or powder form.

### Carbohydrate based polyol

The carbohydrate based polyol can be selected from tetritols, pentitols, hexitols, and higher polyols. The polyol may include but is not limited to erythritol, xylitol, arabinitol, sorbitol, mannitol, iditol, galactitol, maltitol, isomaltitol, isomalt, lactitol, mixtures of two or more thereof, and the like. Preferably the polyol is erythritol, mannitol, isomalt, maltitol or a mixture of two or more thereof.

### Non-caloric high intensity sweetener

A non-caloric high intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin, thaumatin, brazzein and mixtures of two or more thereof, preferably stevioside.

### Polydextrose

Polydextrose is well-known in the art and it is a water-soluble, low caloric, non-cariogenic bulking agent. It is a randomly cross-linked (branched) glucan polymer (polysaccharide complex) characterised by having predominantly β-1-6 and β-1-4 linkage and which is produced through acid-catalysed condensation of saccharides alone or in the presence of sugar alcohols. Polydextrose can be applied in its powder and/or liquid form.

Furthermore, the current invention relates to the edible composition wherein the fiber containing material, being AXOS, is present in an amount of from 2 to 99.5% based on dry matter content of the edible composition. It further relates to the edible composition of the current invention wherein the fiber containing material is present in an amount of from 5 to 90% based on dry matter content of the composition. It further relates to the edible composition of the current invention wherein the fiber containing material is present in an amount of from 10 to 80% based on dry matter content of the composition. It further relates to the edible composition of the current invention wherein the fiber containing material is present in an amount of from 20 to 75% based on dry matter content of the edible composition. It further relates to the edible composition of the current invention wherein the fiber containing material is present in an amount of from 25 to 70% based on dry matter content of the edible composition. It further relates to the edible composition of the current invention wherein the fiber containing material is present in an amount of from 30 to 60% based on dry matter content of the edible composition. It further relates to the edible composition of the current invention wherein the fiber containing material is present in an amount of from 40% to 50% based on dry matter content of the edible composition.

The current invention relates to the edible composition of the current invention wherein the polyol may be present in an amount of 10%, 20%, 25%, 30%, 40%, 50%, 60%, 70%, 75%, 80% or 90% based upon the dry matter content of the edible composition.

The current invention further relates to the edible composition of the current invention wherein the non-caloric high-intensity sweetener is present in an amount of 0.01% up to 3% based upon the dry matter content of the edible composition.

The current invention further relates to a chewing gum composition comprising the edible composition of the present invention and a gum base. The edible composition is present in the chewing gum composition in an amount of from 1 to 85%, preferably 5 to 70, more preferably 10 to 60%, even more preferably 15 to 50% based on the dry matter content of the chewing gum composition. Typically, the gum base can be 15 to 30 wt % of the chewing gum composition.

The gum base for chewing gum composition generally comprises one or more of elastomers resins, waxes, fats, emulsifiers, fillers and/or antioxidants.

More specifically the gum base comprises 3 to 50 wt % of an elastomer; 0.5 to 25 wt % of a softener; 2 to 30 wt % of an emulsifier; 5 to 75 wt % of a resin; and 0 to 20 wt% of a filler. The term "wt %" means weight percent. For example, 1 wt % refers to 1 gram per 100 grams, or 10 grams per 1 kg.

An elastomer can be chosen from a natural rubber, a natural gum, a biodegradable gum, a synthetic elastomer and a combination thereof.

For example, the natural rubber may be chosen from smoked latex, liquid latex, and guayule. The natural and/or biodegradable gum can be chosen from, for example, jelutong, perillo, sorva, massaranduba balata, massaranduba chocolate, nispero, rosindinha, chicle, gutta hang kang, arabinogalactan, guar, xanthan and gums made from proteins, such as gluten and zein. The term "natural" means existing in or formed by nature. The term "biodegradable" means capable of decaying or decomposing through the action of biological processes or agents, such as living organisms. It may be that, the biodegradable gum is less sticky or non-sticky. The synthetic elastomer can be chosen from, for example, butadienestyrene copolymers, isobutylene-isoprene copolymers, polybutadiene, polyisobutylene, and vinyl polymeric elastomers.

A softener (also known as a plasticizer) can include one or more of tallow, hydrogenated tallow, hydrogenated vegetable oils, partially hydrogenated vegetable oils, cocoa butter, glycerol monostearate, glycerol triacetate, lecithin, monoglycerides, diglycerides, triglycerides, acetylated monoglycerides, fatty acids, syrups, such as polyol syrups (e.g., maltitol syrup, glycerol syrup and glycerol) and mixed polyol syrups, and a combination thereof.

A filler can be one or more of lecithin, inulin, dextrin, calcium carbonate, magnesium carbonate, magnesium silicate, ground limestone, aluminum silicate, talc, clay, alumina, titanium dioxide, and calcium phosphate.

A emulsifier can be glycerol monostearate, lecithin, polyglycerol polyricinoleic acid, and/or magnesium stearate.

A resin can be a rosin ester, a terpene resin, polyvinal acetate, polyvinyl alcohol, ethylene vinyl acetate, or vinyl acetate-vinyl laurate copolymer. The rosin ester can be a glycerol ester of partially hydrogenated rosin, a glycerol ester of polymerized rosin, a glycerol ester of partially dimerized rosin, a glycerol ester of rosin, a pentaerythritol ester of partially hydrogenated rosin, a methyl ester of rosin, or a methyl ester of partially hydrogenated rosin. Typically the emulsifier and the softener, the emulsifier and the filler, and the softener and the filler may be different compounds.

Surprisingly it is found that by applying AXOS in a chewing gum composition, the manufacture of the chewing gum composition is working well while the final product is suitable for release of fiber during consumption of said chewing gum composition. The release of fiber appears to happen in a sustainable way, i.e. at a relatively constant rate during the consumption of the chewing gum composition. Further, the chewing gum composition is containing a suitable amount of fiber to promote the health and wellbeing of the consumer.

The health benefits can be explicitly exhibited when the daily intake of the edible composition or chewing gum composition of the current invention is at least amounting in total to 1. g, preferably 1.5 g, preferably to at least 2.5 g, or 3 g, preferably at least 4 g AXOS, and it may be divided over one or more servings. It may even go up to a daily intake of 10 g divided over one or more servings.

It further may depend upon characteristics of the subject, and/or person related characteristics such as age and body weight.

The chewing gum composition further may comprise other carbohydrates, proteins, peptides, amino acids, antioxidants, fats, vitamins, trace elements, electrolytes, flavours and/or mixtures thereof. These other carbohydrates are selected from the group consisting of monosaccharides, disaccharides, gelling starches, starch hydrolysates, viscous fiber containing materials, any other hydrocolloid material (for example xanthan gum, carrageenan, pectin and the like), cellulosic materials, hemicellulosic materials, polyols and mixtures of two or more thereof.

The monosaccharides include tetroses, pentoses, hexoses and ketohexoses. Starch hydrolysates are produced by the controlled acid or enzymatic hydrolysis of starch and can be subdivided into two specific categories, maltodextrins and glucose syrups and are characterized by DE number (dextrose equivalent). In fact, DE number is a measurement of the percentage of reducing sugars present in the syrup and calculated as dextrose on a dry weight basis. Maltodextrins have a DE number up to 20 whereas glucose syrups have an DE number greater than 20. Gelly starches may include emulsified starches such as starch n-octenyl succinate.

Among the major physiological electrolytes are sodium, potassium, chloride, calcium, and magnesium. Further trace elements can be included such as chromium, copper, selenium, iron, manganese, molybdenym, zinc and mixtures thereof.

Among the vitamins one can range vitamin A, vitamin C, vitamin E and/or vitamin B12.

The amount of flavor depends upon the flavor or flavors selected, the flavor impression desired and the form of flavor used. For example, the flavoring agent can be an essential oil or a synthetic flavor, or a combination thereof. The essential oil can be, for example, peppermint oil, spearmint oil, or oil of wintergreen. Alternatively, the flavoring agent can be, for example, a fruit-flavoring agent (e.g., orange oil, lemon oil, banana, cherry, apple, pineapple, grape, strawberry, tutti-frutti, watermelon, or combinations thereof).

If desired, coloring agents can also be added. Any soluble coloring agent approved for food use can be utilized for the current invention.

Further the chewing gum composition of the present invention can be coated with a hard or soft coating. The chewing gum composition typically represents from 20 to 90% by weight (w/w %), preferably 30 to 80 w/w%, more preferably from 40 to 70 w/w % of the weight of the coated chewing gum composition.

The chewing gum of the current invention is used for promoting the health and wellbeing of the consumer, by modulating the colonic ecosystem through promotion of health beneficial gut microbiota, such as bifidobacteria and lactobacilli.

The current invention to the use of the chewing gum composition of the current invention for release of fiber during the consumption of said chewing gum composition. The final product is suitable for release of fiber during consumption of said chewing gum composition. The release of fiber appears to happen in a sustainable way, i.e. at a relatively constant rate during the consumption of the chewing gum composition.

## Claims

1. An edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener.

2. The composition according to claim 1 wherein the arabinoxylan-oligosaccharides and optionally xylo-oligosaccharides have a degree of polymerisation of from 2 to 50.

3. The composition according to claims 1 or 2 wherein the polyol is selected from the group consisting of erythritol, mannitol, isomalt, maltitol and mixtures of two or more thereof.

4. The composition according to claim 1 wherein the composition is further comprising polydextrose.

5. A chewing composition comprising the composition of any of claims 1 to 4 and a gum base.

6. The chewing gum composition according to claim 5 wherein the edible composition of any of claims 1 to 5 is present in an amount of from 1 to 85% based on the dry matter content of the chewing gum composition.

7. The chewing gum composition according to claim 6 wherein the composition of any of claims 1 to 5 is present in an amount of from 5 to 70% based on the dry matter content of the chewing gum.

8. The chewing gum composition according to claim 6 wherein the composition of any of claims 1 to 5 is present in an amount of from 15 to 50% based on the dry matter content of the chewing gum.

9. The chewing gum composition of any of claims 5 to 8 wherein said chewing gum composition is coated.

10. Use of the chewing gum composition according to any of claims 5 to 9 for release of fiber during the consumption of said chewing gum composition.
